# EUROPÄISCHE PATENTSCHRIFT

(11) **EP 0 451 636 B1**
(45) Veröffentlichungstag und Bekanntmachung des Hinweises auf die Patenterteilung: **30.11.1994**
(21) Anmeldenummer: 91104951.8
(22) Anmeldetag: 28.03.1991
(51) Int. Cl.: G01D 5/16

(54) **Dehnungsmessstreifen und Messgrössenaufnehmer mit derartigen Dehnungsmessstreifen**
Foil strain gauge and transducer for using it
Bande pour jauge d'allongement et transducteur utilisant une telle bande

(30) Priorität: 07.04.1990 DE 4011314
(43) Veröffentlichungstag der Anmeldung: 16.10.1991
(73) Patentinhaber: HOTTINGER BALDWIN MESSTECHNIK GMBH, D-64201 Darmstadt (DE)
(72) Erfinder: Ort, Werner, Dr. rer. nat., W-6100 Darmstadt (DE)
(74) Vertreter: Brandt, Ernst-Ulrich, Dipl.-Phys., Dipl.-Ing.

(56) Entgegenhaltungen:
- CA-A- 1 072 217
- GB-A- 728 606
- Druckschrift der Firma Toray, "PPS film Torelina", S. 1-9

## Beschreibung

Die Erfindung bezieht sich auf einen Dehnungsmeßstreifen mit einem auf einer Trägerschicht angeordneten Meßgitter und auf Meßgrößenaufnehmer mit derartigen Dehnungsmeßstreifen.

Ein Dehnungsmeßstreifen der eingangs genannten Art ist aus der GB-PS 728 606 bekannt. Aus einer sehr dünnen, gewalzten Metallfolie wird fotolithografisch ein Meßgitter in Form eines Widerstandsmäanders mit Kontaktbereichen an den Enden ausgeätzt; die Metallfolie ist dabei mit einer zweiten Metallfolie verbunden. Nach dem Ätzvorgang wird eine isolierende Epoxidharz-Trägerschicht auf die erste Metallfolie aufgebracht und die zweite Metallfolie entfernt. Dehnungsmeßstreifen mit einer Epoxidharz-Trägerschicht sind bezüglich Herstellung, Handhabung und Applikation mit Problemen behaftet, da die Trägerschicht spröde ist und damit Bruchgefahr besteht. Eine Verwendung bei Meßgrößenaufnehmern bedarf besonders vorsichtiger Handhabung, während die Verwendung bei Spannungsanalysen nicht gebräuchlich ist. Diese Probleme liegen auch bei Dehnungsmeßstreifen vor, die eine Phenolharz-Trägerschicht aufweisen.

Ferner sind Dehnungsmeßstreifen bekannt, die durch ein Glasfaservlies verstärkte Epoxidharz- bzw. Phenolharz-Trägerschichten aufweisen. Zwar sind bei derartigen Dehnungsmeßstreifen die elastischen Eigenschaften ähnlich wie bei Faserverbundmaterialien verbessert, jedoch ergeben sich aufgrund von ungleichmäßiger Vliesqualität, Dickenschwankungen und Strukturfehlern nicht unwesentliche Beeinträchtigungen der Meßgrößenaufnehmer-Kenngrößen.

Insbesondere ergibt sich eine nicht vorherbestimmbare und damit nicht zu kompensierende Beeinflussung der Kriecheigenschaften bzw. es ergeben sich nur z.B. nach Patent DE 29 16 427 bei Verwendung spezieller Dehnungsmeßstreifen bei entsprechendem Aufwand am einzelnen Element zu kompensierende Kriecheigenschaften. Fehler im Glasfaservlies wie z.B. kleine Knoten, Glasklümpchen oder Flecken führen auch zu erheblichem Ausschuß bei der Dehnungsmeßstreifenfertigung.

Bei einer weiteren Spezies von Folien-Dehnungsmeßstreifen wird Polyimid oder Polyamidimid als Matrix (Träger und Abdeckung) verwendet, wobei man entweder entsprechende Folien mit der Meßgitterfolie verklebt oder die Metallfolie mit dem Harz beschichtet und dieses dann aushärtet. Diese Technik ergibt sehr robuste Dehnungsmeßstreifen, weil die Matrix sehr flexibel und reißfest ist. Solche Dehnungsmeßstreifen werden vorzugsweise für die Spannungsanalyse verwendet. Für den Bau von Präzisionsaufnehmern sind sie nicht geeignet, da sie zu stark kriechen.

Allen drei genannten Dehnungsmeßstreifen-Arten haftet der Mangel an, daß sie feuchteempfindlich sind, weil die Matrix in Abhängigkeit vom Feuchtegehalt der Umgebungsatmosphäre quillt oder schrumpft. Dies führt zu Widerstandsänderungen der Dehnungsmeßstreifen und in Folge zu einem unsicheren Nullsignal entsprechender Aufnehmer. Ist dies selbst schon ein erheblicher Mangel, führt es außerdem noch dazu, daß der Temperaturgang des Nullpunkts (TKO) der Aufnehmer nicht genau abgeglichen werden kann. Außerdem ist der Kriechfehler von Aufnehmern mit derartigen Dehnungsmeßstreifen temperaturabhängig. Zusammengenommen führt dies zu enormen Schwierigkeiten bei der Entwicklung und dem Bau von präziseren Aufnehmern. Zwar kann man nach der Lehre der DE-PS 2916 427 bei Verwendung spezieller Dehnungsmeßstreifen das Kriechen von Aufnehmern abgleichen. Im wesentlichen besteht dies jedoch in einer Verschiebung der Kriechkurve über der Temperatur parallel zur Temperaturachse. Die Kurvenform selbst ist gezielt bisher nicht beeinflußbar.

Neben einer Verbilligung der Dehnungsmeßstreifen und insbesondere der Aufnehmer verlangt der Markt nach verbesserten Aufnehmern. Die Anforderungen bei Mehrteilungswaagen machen gravierende Verbesserungen bei den Kriechspezifikationen, beim Temperaturgang des Nullsignals, bei der Linearität und bei der Umkehrspanne erforderlich. Mit herkömmlichen Dehnungsmeßstreifen sind diese Forderungen gleichzeitig nicht erfüllbar.

Der Erfindung liegt daher die Aufgabe zugrunde, einen Dehnungsmeßstreifen zu schaffen, der die Nachteile der bekannten Dehnungsmeßstreifen nicht aufweist, der darüber hinaus robust in der Anwendung ist und der sich einfach und fehlerfrei herstellen läßt und darauf aufbauend Aufnehmer mit erheblich verbesserten Meßeigenschaften zu schaffen, die außerdem noch kostengünstiger herstellbar sind.

Erfindungsgemäß wird diese Aufgabe dadurch gelöst, daß die Trägerschicht aus einer Polyphenylensulfid-Folie besteht. Es findet eine isolierende, flexible, fehlstellenarme und gleichmäßig dicke, biaxial orientierte Polyphenylensulfid-Folie als Trägerschicht und ggf. auch als Deckschicht Verwendung. Eine derartige Folie besitzt gegenüber den bekannten Trägerschichten eine deutlich verringerte Wasserdurchlässigkeit durch Diffusion und eine deutlich verringerte Quellneigung. Mit der Erfindung ist sichergestellt, daß Feuchteschwankungen den Widerstand der Dehnungsmeßstreifen-Meßstelle, d. h. der aufgeklebten Dehnungsmeßstreifen, praktisch nicht mehr beeinflussen. Dadurch wird die Präzision von Messungen mit insbesondere Metallfolien-Dehnungsmeßstreifen in der Spannungsanalyse und die Meßgenauigkeit von Dehnungsmeßstreifen-Aufnehmern deutlich gesteigert, weil das Nullsignal stabil steht und dadurch der Temperaturgang des Nullsignals genauer bestimmt und abgeglichen werden kann. Dies ist besonders wichtig bei Wägezellen für Mehrteilungswaagen, bei denen die Toleranz für den Temperaturgang des Nullsignals gravierend eingeengt ist, beispielsweise bei gängigen Ladentischwaagen 15 kg - 5 g/6 kg - 2 g um den Faktor 2/5. Die Herstellkosten der Aufnehmer können zusätzlich erheblich gesenkt werden, weil in vielen Fällen auf die hermetisch dichte Kapselung verzichtet werden kann, was zu einer erheblichen Vereinfachung der Konstruktion führt. Eine Oxidation des zwischen den Polyphenylensulfid-Folien eingebetteten Meßgitters ist im Anwendungstemperaturbereich von Wägezellen praktisch nicht mehr feststellbar. Darauf zurückzuführende permanente Widerstandsänderungen des Meßgitters mit nachteiliger Beeinflussung des Nullsignals von Aufnehmern treten nicht mehr auf. Überraschenderweise erfüllen nicht hermetisch gekapselte Aufnehmer mit erfindungsgemäßen Dehnungsmeßstreifen die derzeit geltenden Anforderungen des Feuchtetests der Physikalisch-Technischen Bundesanstalt gemäß DIN IEC 68, ohne daß zusätzliche Maßnahmen wie z. B. weitere Deckschichten erforderlich sind. Im Hinblick auf die Formung des Meßgitters mittels Ätzprozessen ist die ausgezeichnete chemische Beständigkeit von Polyphenylensulfid sehr vorteilhaft.

Ein weiterer, mit der Erfindung erzielter überraschender Vorteil liegt darin, daß die Streuung des Kriechfehlers derart gering ist, daß der Dehnungsmeßstreifen nach der Erfindung, ggf. nach einem pauschalen Abgleich des Mittelwertes des Kriechfehlers etwa nach der im Patent DE 29 16 427 beschriebenen Methode, sogar bei mehrteilungsfähigen Wägezellen einsetzbar ist. Bei mehrteilungsfähigen Wägezellen wird der Kriechfehler um einen Faktor eingeschränkt gegenüber einer Wägezelle, die nur für einen Teilungsbereich vorgesehen ist, im Beispiel obiger Ladentischwaage um den Faktor 2/5. Das Erreichen eines derart geringen Kriechfehlers war aufgrund der mit vergleichbaren Dehnungsmeßstreifen mit Trägerschichten aus Polyimid oder Polyamidimid gemachten Erfahrungen keinesfalls zu erwarten. Als glücklicher Griff erweist sich der Einsatz von Polyphenylensulfid-Folienmaterial bei Dehnungsmeßstreifen insbesondere in Hinsicht auf die Temperaturabhängigkeit des Kriechfehlers; die Temperaturabhängigkeit des Kriechfehlers ist durch die Erfindung fast vollständig beseitigt. Aufgrund des geringen Kriechfehlers und seiner vernachlässigbaren Temperaturabhängigkeit kann auf die bisher erforderlichen Einzelprüfungen verzichtet werden und stattdessen mit statistischen Methoden die Qualität überwacht werden. Dadurch verringert sich der Prüfaufwand erheblich. Auch der bei dem seitherigen Herausprüfen von qualitativ höherwertigen Aufnehmern anfallende Ausschuß entsteht nicht mehr, was einen erheblichen Kostenvorteil ergibt. Der erfindungsgemäße Dehnungsmeßstreifen weist noch weitere vorteilhafte Eigenschaften auf, er ist frei von Hysterese, das Nullsignal wird sehr gut reproduziert und ein exaktes Sich-einstellen der Nullanzeige auch bei einer Meßauflösung von z. B. 20 000 Schritten ist gegeben. Da die Eigenschaften sehr gut reproduzierbar sind, sind einfache Abgleichmaßnahmen möglich, die zu sehr genauen Meßgrößenaufnehmern führen. Außerdem ist der Dehnungsmeßstreifen einfach und weitgehend fehlerfrei fertigbar. Sogar eine automatische Herstellung ist möglich, da die mechanischen Eigenschaften der Polyphenylensulfid-Folien eine problemlose Handhabung auch in einem automatisierten Herstellungsprozeß gewährleisten. Weit höher fallen jedoch die Kostenvorteile und der Qualitätssprung bei den betreffenden Aufnehmern ins Gewicht.

Mit dem erfindungsgemäßen Dehnungsmeßstreifen werden erstmalig alle wesentlichen, an einen Dehnungsmeßstreifen zu stellenden Anforderungen gleichzeitig und vor allem gleichmäßig gut erfüllt.

Zwar sind aus der Druckschrift "PPS Film Torelina" der Firma Toray Materialeigenschaften und Einsatzmöglichkeiten von Polyphenylensulfid-Folien, beispielsweise als Träger für gedruckte Schaltungen, bekannt, jedoch finden sich für die überraschende besondere Eignung als Träger oder Matrix für Dehnungsmeßstreifen in der Auflistung der Folieneigenschaften keinerlei Hinweise oder Anregungen; dies gilt insbesondere für das Kriechverhalten des erfindungsgemäßen Dehnungsmeßstreifens und für das Bestehen des Feuchtetests in Verbindung mit den weiteren Eigenschaften.

Die Erfindung wird im folgenden anhand der schematischen Darstellungen in der Zeichnung näher erläutert. Es zeigen:
- Fig. 1: einen Meßgrößenaufnehmer mit Dehnungsmeßstreifen
- Fig. 2a,b: das Fehlerband einer mehrteilungsfähigen Wägezelle
- Fig. 2c: das Fehlerband einer mehrteilungsfähigen Wägezelle mit den Kennlinien für Belastungen und anschließende Entlastungen bei verschiedenen Temperaturen
- Fig. 3a: eine schematische Darstellung zur Erläuterung des Nullpunktversatzes bzw. des Kriechens
- Fig. 3b: in schematischer Darstellung das Kriechen nach Kurzzeitbelastung für verschiedene Temperaturen

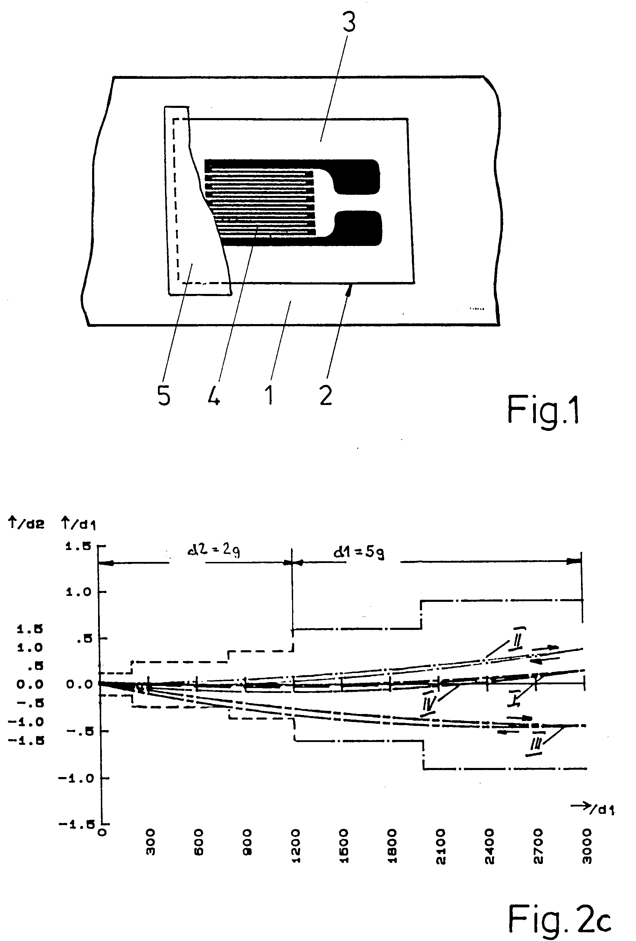

Gemäß Fig. 1 ist auf dem Federkörper 1 eines Meßgrößenaufnehmers ein Dehnungsmeßstreifen 2 appliziert, der eine Trägerschicht 3, ein Meßgitter 4 und ggf. eine Deckschicht 5 aufweist; die Deckschicht 5 ist in Fig. 1 nur teilweise dargestellt.

Das Meßgitter 4 weist einen mäanderförmig angeordneten Streifen einer dünnen Metallschicht, beispielsweise aus Konstantan, auf, dessen Enden über Anschlußpunkte mit einer Auswerteschaltung in Form z. B. einer Wheatstone schen Brückenschaltung verbindbar sind. Beim Bau von Aufnehmern werden stets vier solcher Dehnungsmeßstreifen verwendet und zu einer Wheatstoneschen Brücke verschaltet. Das Meßgitter 4 wird aus einer entsprechenden Metallfolie beispielsweise durch Ätzen geformt, die ihrerseits auf der Trägerschicht 3 angeordnet und z.B. durch eine Klebschicht fest mit ihr verbunden ist. Die Trägerschicht 3 ist eine schmelz-extrudierte, teilweise kristalline, biaxial-orientierte Polyphenylensulfid-Folie und weist eine Dicke von etwa 25 Mikrometern auf. Die Folie hat eine besonders geringe Feuchtigkeitsaufnahme, nämlich etwa 0,05 Prozent bei 75 Prozent relativer Feuchte. Die Polyphenylensulfid-Folie quillt bei Feuchtigkeitsaufnahme sehr wenig, der entsprechende Wert des hygroskopischen Ausdehnungskoeffizienten ist kleiner als 2 x 10⁻⁶ m/m/% relativer Feuchte. Der hygroskopische Ausdehnungskoeffizient gibt die relative Längenänderung an, die ein Folienstreifen erfährt, wenn sich die relative Feuchte der umgebenden Atmosphäre um 1 Prozent ändert. Die Polyphenylensulfid-Folie ist chemisch sehr beständig, was für die Formung des Meßgitters 4 aus der Metallfolie unter Zuhilfenahme lithografischer Prozesse und chemischer Ätzprozesse vorteilhaft ist.

Der Dehnungsmeßstreifen kann nach der Formung des Meßgitters mit einer Deckschicht 5 aus Polyphenylensulfid versehen werden, sodaß das Meßgitter 4 zwischen Polyphenylensulfidschichten eingebettet ist. Die Deckschicht in Form einer Folie kann mit der Trägerfolie z.B. durch Kleben oder Heißverpressen verbunden sein. Die Deckfolie weist eine Dicke von etwa 10 bis 25 Mikrometern auf, so daß die Dicke des Dehnungsmeßstreifens etwa 35 bis 50 Mikrometer plus Dicke des Meßgitters beträgt.

Es liegt im Rahmen der Erfindung, die Polyphenylensulfid-Folie auch als Trägerfolie für Dehnungsmeßstreifen einzusetzen, bei denen das Meßgitter beispielsweise durch Verdampfen oder Sputtern im Vakuum unter Benutzung von Masken für die Meßgitterform auf die Trägerfolie aufgebracht wird.

Der Dehnungsmeßstreifen 2 ist auf dem Federkörper 1 in üblicher Weise mittels einer Klebschicht appliziert. Der Federkörper mit applizierten Dehnungsmeßstreifen, der Dehnungsmeßstreifen-Aufnehmer, kann beispielsweise als Wägezelle einer Waage Verwendung finden.

Besondere Vorteile bietet der erfindungsgemäße Dehnungsmeßstreifen-Aufnehmer bei einer Ausgestaltung als Plattform-Wägezelle für Mehrteilungswaagen. Eine Plattform-Wägezelle beinhaltet die für oberschalige Waagen notwendige Führungsfunktion und macht die früher übliche Mechanik überflüssig. Mehrteilungswaagen sind ausgelegt für mindestens zwei Wägebereiche mit unterschiedlicher Teilung d (das ist der Abstand zweier aufeinander folgender Anzeigewerte). Die Waage arbeitet dabei automatisch mit kleinerer Teilung, d2, in einem Anfangswägebereich unabhängig von einer Tarierung und springt automatisch in die gröbere Teilung, d1, sobald der Anfangswägebereich überschritten wird. Am Beispiel der gebräuchlichsten Ladentischwaage sieht das so aus: Anfangswägebereich 6kg mit einer Teilung d2 = 2g. Überschreitet das aufgelegte Gewicht 6kg, dann springt die Waage für den restlichen Wägebereich bis 15kg in die gröbere Teilung d1 = 5g (Fig. 2a). Bei Aufliegen der Taralast wird nach Tarierung der Waage ebenfalls mit dem Anfangswägebereich und der feinen Teilung begonnen. Die Taralast schmälert jedoch den verfügbaren Wägebereich entsprechend. Figur 2a zeigt das für die angeführte Wägezelle zulässige Fehlerband, das ist die von der idealen Charakteristik über den Anwendungstemperaturbereich zulässige Abweichung, wenn die Wägezelle in geeichten Waagen (der Klasse III nach PTB bzw. Klasse C nach OIML) zum Einsatz kommt. Im allgemeinen beträgt das Fehlerband der Wägezelle 70 % der Eichfehlergrenzen der Waage, was auch in diesem Fall angenommen wird. Figur 2b (aus Gründen der Anschaulichkeit gestrichelt in Fig. 2a eingezeichnet) zeigt die Verhältnisse bei Aufliegen einer Taralast, woraus man unschwer erkennt, daß die zulässige Toleranz für den Kriechfehler bzw. für die gleichwertige Belastungsnulldrift (BE.ND) wesentlich eingeengt wird, weil dieser Fehler lastabhängig ist und trotz aufliegender Tara das eingeengte Fehlerband der Anfangslast gilt. Auch die Toleranz des Temperaturgangs des Nullsignals wird wesentlich eingeschränkt, in unserem Beispiel auf 2/5 gegenüber einer Waage mit der durchgängigen Teilung von 5g.

Die in Fig. 2c (Fehlerband in Einheiten der Teilung d1 bzw. d2 für eine mehrteilungsfähige Wägezelle gemäß Beispiel) eingetragenen Kurven 1 bis IV stellen die an einer Wägezelle für obige Ladentischwaage gemessenen Abweichungen bei einer von Null bis zur maximalen Last gehenden Belastung mit anschließender Entlastung dar, wie in Fig. 2c durch die Pfeile an der Kurve II und III (zur Verdeutlichung gespreizt dargestellt) angedeutet. Die Kurven I bis IV wurden bei plus 20° Celsius, minus 10° Celsius, plus 40° Celsius und plus 20° Celsius aufgenommen an einer Wägezelle, die mit Polyphenylensulfid-Dehnungsmeßstreifen versehen war.

Aus der Darstellung in Fig. 2c ist ersichtlich, daß der Nullpunkt bei allen Kurven I bis IV, d.h. bei allen Temperaturen exakt erreicht bzw. wieder erreicht wird, was bedeutet, daß die Meßergebnisse zeitstabil und reproduzierbar sind.

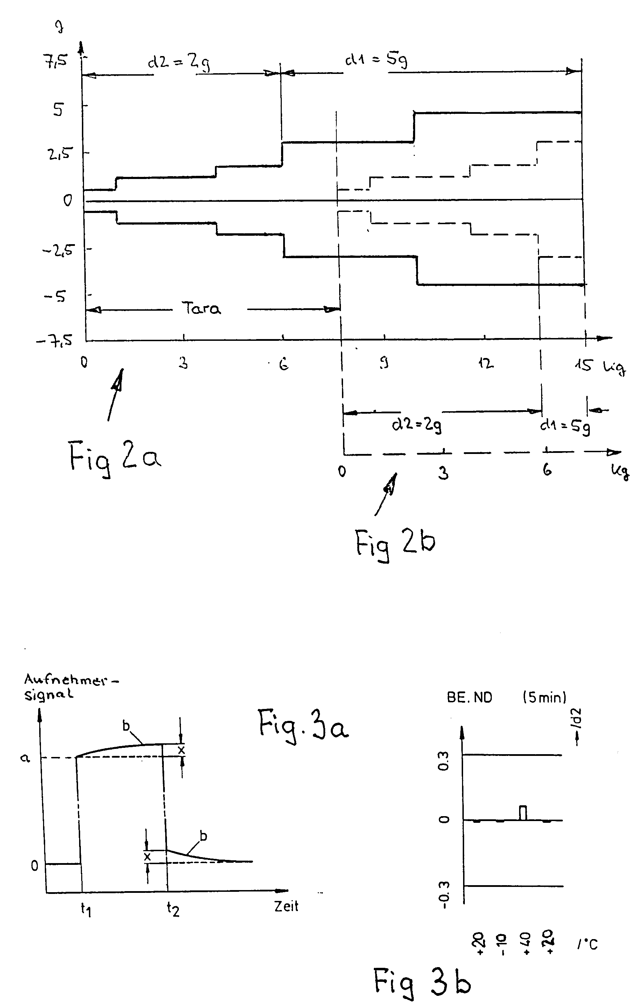

Die Darstellung in Fig. 3a ist eine prinzipielle Darstellung für das belastungsabhängige Kriechen einer Wägezelle. Der Y-Achse ist das Aufnehmersignal und der X-Achse die Zeit zugeordnet. Zum Zeitpunkt t₁ erfolgt eine definierte Belastung, die zum Signalsprung a führt, zum Zeitpunkt t₂ die Entlastung der Wägezelle. Das belastungsabhängige Kriechen wird durch die Größe x repräsentiert, die man meßtechnisch besonders einfach nach Entlastung ermitteln kann (Belastungsnulldrift BE.ND)

Die Fig. 3b zeigt ein Balken-Diagramm, in dem das belastungsabhängige Kriechen bei einer Belastungszeit von 5 Minuten für verschiedene Temperaturen (plus 20° Celsius, minus 10° Celsius, plus 40° Celsius, plus 20° Celsius) dargestellt ist. In vertikaler Richtung ist der Kriechfehler in Einheiten der Teilung d₂ dargestellt. Für das Kriechen bzw. die leichter zu messende Belastungsnulldrift (BE.ND) liegt nach den in Deutschland geltenden Vorschriften der PTB (Bericht ME-30) die Fehlergrenze bei 0,5 d in 30 Minuten. Für die Messung über 5 Minuten wurde die Toleranz deshalb auf 0,3 x d₂ eingeengt. Die Wägezelle für obige Ladentischwaage (Federmaterial CuBe, Dehnungsmeßstreifen mit einer Matrix aus Polyphenylensulfid-Folie) erfüllt die Anforderungen im ganzen Anwendungstemperaturbereich überraschend gut. Es liegt ein sehr geringer Kriechfehler vor, der zudem noch kompensiert werden kann, beispielsweise durch die Maßnahme nach dem deutschen Patent 29 16 427. Aus der Fig. 3b ist ferner ersichtlich, daß - in Hinblick auf die zulässige Toleranz von 0,3 d₂ - der Kriechfehler kaum noch temperaturabhängig ist. Ferner haben Untersuchungen gezeigt, daß die Belastungsnulldrift bzw. das Kriechen nur noch in vernachlässigbarem Umfang feuchteabhängig ist. Die Wägezelle wurde zunächst über einen längeren Zeitraum mit Zeolith als Trocknungsmittel ausgetrocknet und die Belastungsnulldrift für verschiedene Temperaturen ermittelt. Danach wurde die Wägezelle ebenfalls über einen längeren Zeitraum der normalen Umgebungsatmosphäre ausgesetzt und anschließend die Belastungsnulldrift für verschiedene Temperaturen ermittelt. Überraschenderweise waren die auftretenden Veränderungen minimal und die Belastungsnulldrift blieb auch bei verschiedenen Feuchten temperaturunabhängig.

Auf Grund des geringen Kriechfehlers und seiner vernachlässigbaren Temperaturabhängigkeit kann auf Einzelprüfungen verzichtet werden und allein mit statistischen Methoden die Qualitätsüberwachung durchgeführt werden. Eine mit Dehnungsmeßstreifen aus Polyphenylensulfid versehene Wägezelle ist auf Grund der gleichmäßig und überraschend guten Erfüllung aller an eine Wägezelle für eichfähige Waagen zu stellenden Anforderungen zum Einsatz insbesondere in Mehrteilungswaagen hervorragend geeignet.

## Patentansprüche

1. Dehnungsmeßstreifen, insbesondere Dehnungsmeßstreifen für Meßgrößenaufnehmer, mit einem auf einer Trägerschicht angeordneten Meßgitter, dadurch gekennzeichnet, daß die Trägerschicht durch eine Polyphenylensulfid-Folie gebildet ist.

2. Meßgrößenaufnehmer mit zumindest einem Dehnungsmeßstreifen mit einem auf einer Trägerschicht angeordneten Meßgitter, dadurch gekennzeichnet, daß die Trägerschicht des Dehnungsmeßstreifens und ggf. eine das Meßgitter abdeckende Schicht durch eine Polyphenylensulfid-Folie gebildet ist.

3. Dehnungsmeßstreifen nach Anspruch 1 oder Anspruch 2, dadurch gekennzeichnet, daß die Dicke der Trägerfolie etwa 25 Mikrometer beträgt.

4. Dehnungsmeßstreifen nach Anspruch 1, dadurch gekennzeichnet, daß eine das Meßgitter abdeckende Schicht vorgesehen ist, die durch eine Polyphenylensulfid-Folie gebildet ist.

5. Dehnungsmeßstreifen nach einem oder mehreren der vorhergehenden Ansprüche, dadurch gekennzeichnet, daß die Dicke der Deckfolie etwa 10 bis 25 Mikrometer beträgt.

## Claims

1. Strain gauge, particularly a strain gauge for measured value pickups, with a measuring grid disposed on a substrate, characterised in that the substrate is formed by a polyphenylene sulphide film.

2. Measured value pickup with at least one strain gauge with a measuring grid disposed on a substrate, characterised in that the substrate of the strain gauge and possibly a layer covering the measuring grid is formed by a polyphenylene sulphide film.

3. Strain gauge according to Claim 1 or Claim 2, characterised in that the thickness of the film substrate is approximately 25 micrometres.

4. Strain gauge according to Claim 1, characterised in that a layer is provided which covers the measuring grid and is formed by a polyphenylene sulphide film.

5. Strain gauge according to one or more of the preceding claims, characterised in that the thickness of the covering film is approximately 10 to 25 micrometres.

## Revendications

1. Extensomètre à bande, en particulier extensomètre à bande pour capteur de grandeurs de mesures comportant une grille de mesures placée sur une couche de support, caractérisé en ce que la couche de support est formée par une feuille de sulfure de polyphénylène.

2. Capteur de grandeurs de mesures comportant au moins un extensomètre à bande avec une grille de mesure placée sur une couche de support, caractérisé en ce que la couche de support de l'extensomètre à bande et éventuellement une couche recouvrant la grille de mesure est formée par une feuille de sulfure de polyphénylène.

3. Extensomètre à bande selon la revendication 1 ou 2, caractérisé en ce que l'épaisseur de la feuille de support est de 25 microns environ.

4. Extensomètre à bande selon la revendication 1, caractérisé en ce qu'il est prévu une couche recouvrant la grille de mesure, qui est formée par une feuille de sulfure de polyphénylène,

5. Extensomètre à bande selon une ou plusieurs des revendications précédentes caractérisé en ce que l'épaisseur de la feuille de couverture est comprise entre 10 et 25 microns environ.
